Europäisches Patentamt

(19) European Patent Office

Office européen des brevets

(11) Publication number : **0 445 917 A1**

## (12) EUROPEAN PATENT APPLICATION

(21) Application number : 91300872.8

(51) Int. Cl.⁵ : **F16B 37/04**

(22) Date of filing : 04.02.91

(30) Priority : 06.03.90 GB 9005000

(43) Date of publication of application :
11.09.91 Bulletin 91/37

(84) Designated Contracting States :
AT BE CH DE DK ES FR GB GR IT LI LU NL SE

(71) Applicant : **P.S.M. INTERNATIONAL PLC**
**Leighswood Road, Aldridge**
**Walsall, West Midlands WS9 8DS (GB)**

(72) Inventor : **Perry, Colin Brian**
**92 Bryn-y-mor Road, Gowerton, Swansea SA4**
**3EZ**
**West Glamorgan, Wales (GB)**

(74) Representative : **Hands, Horace Geoffrey et al**
**LEWIS W. GOOLD & CO. Whitehall Chambers**
**23, Colmore Row**
**Birmingham B3 2BL (GB)**

(54) Improvements relating to fasteners.

(57)   A sheet metal nut of the kind made from a length of strip bent into a U, to be slipped onto the edge of a panel, with a turn of a screwthread formed by a helical deformation of the edge of one aperture (20) in one limb (18), is adapted for retention on the panel by providing lugs (40) struck up in the edge of the aperture on the second limb (12). Hence the panel which is engaged by the nut needs an aperture of a size which is a clearance hole for the screw plus the thickness of the lugs only.

Fig. 1

EP 0 445 917 A1

# IMPROVEMENTS RELATING TO FASTENERS

This invention relates to fasteners of the kind comprising a strip of sheet material folded into a U shape and with aligned apertures through the two limbs of the U, one of the apertures having its peripheral edge slotted radially and that the marginal portion of the strip adjacent the periphery may be deformed into a helical shape, so as to engage with an appropriate screw and act as a nut thereon. The purpose of the U is to embrace the marginal portion of a panel having a hole aligned with the apertures in the nut.

These nuts are widely used in mass production, for example of motor vehicles, and it is often necessary to locate the nuts on the panels some time or distance before the screw is engaged. For this reason it is conventional to extend the free ends of the limbs of the U and shape them so as to enable the panel edge to be gripped between them, and/or to locate the non-helical apertures in a tab struck up out of the plane of the limb but still united with the limb, and this tab may then be received in the hole in the panel.

The object of the present invention is to provide improvements, and in particular to reduce the amount of material required to make these nuts.

According to the invention integral lugs are formed at a number of positions about the periphery of the aperture in the other limb and extend towards the said one limb. These lugs engage in the panel aperture to hold the nut in place but require relatively little space in that aperture since it is only the thickness of the sheet metal from which the nut is made which has to be accommodated instead of a more substantial width as in the prior art. This enables a shorter length of strip to be used and gives other advantages as will be explained hereinafter.

In the accompanying drawings:

Figure 1 is a side view of one nut according to the present invention;

Figure 2 is a plan view of the nut of Figure 1;

Figure 3 is a section on the line A-A of Figure 1;

Figures 4 and 5 are views similar to Figures 1 and 2 showing a modification.

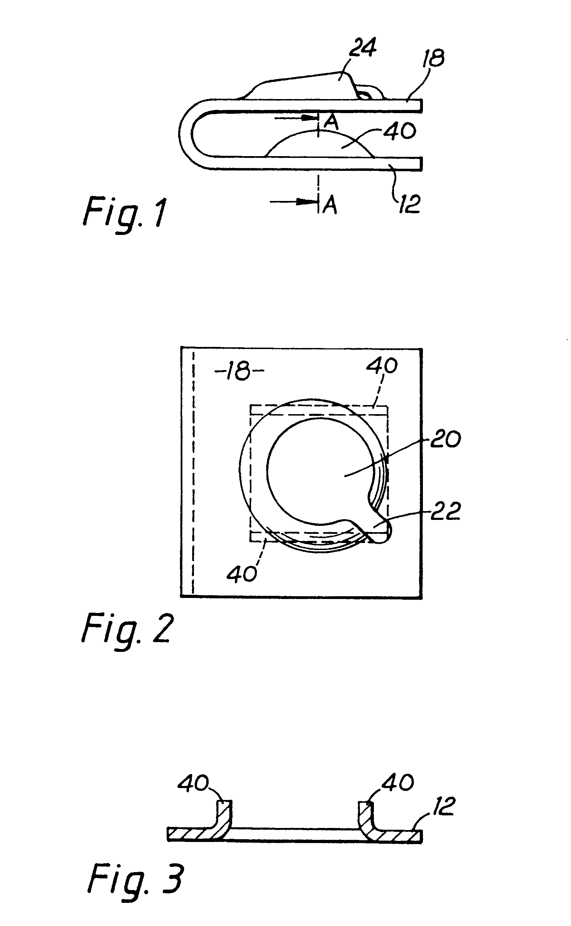

Turning now to Figures 1 -3, the nut therein shown has the limb 18 formed with aperture 20 and radial slot 22 enabling the marginal edge portions to be helically disposed. Limb 12 is formed with an aperture of substantially square shape as seen in broken line in the plan view of Figure 1, and some of the material of the aperture forms a pair of internally directed parallel arcuate lugs 40.

Using the invention, the nut is slipped onto the edge of the panel and the arcuate lugs 40 act as cams to separate the limbs 12, 18 until those lugs register with the panel hole when the resilience of the material returns the limbs to the illustrated position shown in Figure 1. The arcuate shape of the lugs facilitates this alignment and positively draws the nut into complete register and alignment with the hole.

Because it is no longer necessary to make the aperture in limb 12 sufficiently large to include not only the full diameter of the intended screw but also of the tab which effectively forms a ring surround that screw in the prior art, both limbs can be made shorter, that is to say the axis of both apertures can be moved that much closer to the U-bend connecting the two limbs. Moreover, the hole in the panel now needs to be only the full diameter of the screw, instead of being greater than the tab which is essentially larger than the screw because it is pierced to take the screw. The hole can be located closer to the edge of the panel than hitherto, as a result, which is considered advantageous by panel designers.

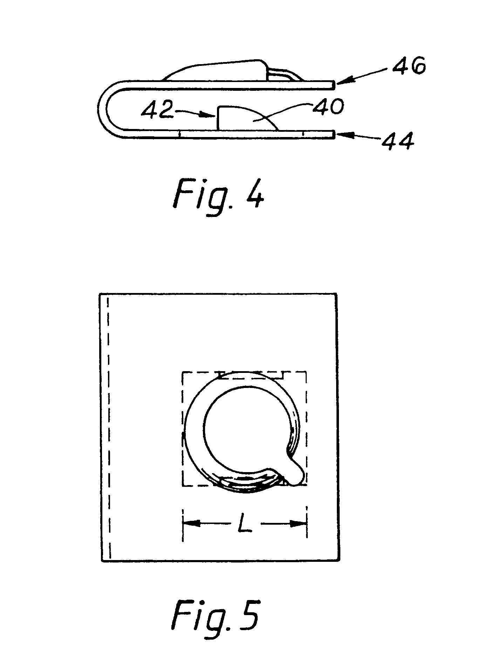

In the modification of Figures 4 and 5, the arcuate lugs 40 are provided with a stop edge 42 located at the end of the lugs remote from the free ends 44,46 which are to receive the panel between them. The effect is that as the nut is slipped onto the edge of the panel, the lugs serve to engage in the panel hole in the same way as in Figures 1 to 3, but the nut is retained on the panel better, because it is now impossible for the lugs to have the same camming effect in disengagement of the nut from the panel. If the nut is moved in the direction to disengage it from the edge of the panel, the edge of the panel aperture engages the stop edges 42 and this limits the movement. In addition, the stop lugs are now shorter than the length L of the aperture, and this provides additional adjustment movement of the nut on the panel to take up tolerances.

## Claims

1. A nut of the kind comprising a strip of sheet metal folded into a U shape with aligned apertures in the two limbs, a radial slot from the edge of the aperture in one limb and a helical deformation of the marginal portion of said one aperture, characterised in that integral lugs are formed at a number of positions about the periphery of the aperture in the other limb and extend towards the said one limb.

2. A nut as claimed in Claim 1 wherein the aperture in the second limb is rectangular and two said lugs are provided on edges of said aperture parallel to the sides of the strip.

3. A nut as claimed in Claim 2 wherein the lugs are semi-elliptical and of substantially the same length as the rectangle.

4. A nut as claimed in Claim 2 wherein the lugs are part-elliptical extending in cam formation from a minimum height of the limb at the end of the aperture nearest to the free end edge of the strip, upto a maximum height partway along the length of the rectangle, and with end edges normal to the limb.

5. A nut made from sheet metal substantially as described with reference to Figures 1 to 3 of the accompanying drawings.

6. A nut made from sheet metal strip substantially as described with reference to Figures 4 and 5 of the accompanying drawings.

*Fig. 1*

*Fig. 2*

*Fig. 3*

4

Fig. 4

Fig. 5

EP 0 445 917 A1

European Patent Office

**EUROPEAN SEARCH REPORT**

Application Number

EP 91 30 0872

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | FR-A-1500164 (THE BISHOP AND BABCOCK CORP.)<br>* the whole document *<br>--- | 1 | F16B37/04 |
| X | FR-A-2429924 (A. RAYMOND)<br>* the whole document *<br>--- | 1 | |
| Y | FR-A-1156119 (CARR FASRENER CO. LTD.)<br>* the whole document *<br>--- | 1, 2, 5 | |
| Y | US-A-4729706 (FRANCIS C. PETERSON)<br>* column 2, line 32 - column 3, line 34; figures *<br>----- | 1, 2, 5 | |
| | | | **TECHNICAL FIELDS SEARCHED (Int. Cl.5)**<br><br>F16B |

The present search report has been drawn up for all claims

| Place of search | Date of completion of the search | Examiner |
|---|---|---|
| THE HAGUE | 03 JUNE 1991 | ARESO Y SALINAS |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

6